# FASCICULE DE BREVET EUROPEEN

(11) **EP 2 081 280 B1**
(45) Date de publication et mention de la délivrance du brevet: **20.02.2019**
(21) Numéro de dépôt: 09150431.6
(22) Date de dépôt: 13.01.2009
(51) Int. Cl.: H02K 5/24, F04D 25/08, F04D 29/66

(54) **Dispositif de support de moteur pour système de ventilation, chauffage et/ou climatisation**
Motorträgervorrichtung für Belüftungssystem, Heizsystem und/oder Klimaanlage
Support device for the motor of a heating and/or air-conditioning ventilation system

(30) Priorité: 15.01.2008 FR 0800212
(43) Date de publication de la demande: 22.07.2009
(73) Titulaire: Valeo Systèmes Thermiques, 78321 Le Mesnil Saint Denis (FR)
(72) Inventeur: Naji, Said, 78990, ELANCOURT (FR); Duputel, Patrick, 95240, CORMEILLES EN PARISIS (FR); Touitou, Pascal, 60270, GOUVIEUX (FR); Vincent, Philippe, 28230, EPERNON (FR); Zisko, Peter, 10700, PRAHA 10 - DUBEC (CZ); Stroehla, Ralph, 96450, COBURG (DE)
(74) Mandataire: Metz, Gaëlle

(56) Documents cités:
- EP-A- 1 107 432
- EP-A- 1 308 632
- FR-A- 2 711 020
- FR-A- 2 711 459
- FR-A- 2 740 625
- GB-A- 439 817
- GB-A- 1 000 252
- JP-A- H06 147 261
- US-A1- 2002 001 484
- US-A1- 2004 032 177
- US-B1- 6 279 866

## Description

L'invention se rapporte au domaine des dispositifs de support de moteur pour système de ventilation, chauffage et/ou climatisation pour véhicule automobile. Plus particulièrement, l'invention porte sur un dispositif de support comprenant un moyen de découplage des vibrations du moteur.

Dans un système de ventilation, chauffage et/ou climatisation, le flux d'air y circulant est propulsé par une roue de pulseur mise en rotation par un moteur. La mise en oeuvre de la roue de pulseur et du moteur créent des vibrations. Ces vibrations sont à l'origine de nuisances sonores et vibratoire (balourd) dans l'habitacle du véhicule du moteur logé dans un support moteur. Les vibrations sont transmises via le support moteur à l'ensemble du système de ventilation, chauffage et/ou climatisation et créent des ondes acoustiques gênantes pour le confort des passagers du véhicule.

Pour pallier à cela, des moyens de découplage ont été disposés entre le moteur et le support moteur ou entre une bague logeant le moteur et le support moteur. Ces moyens de découplage ne sont efficaces que pour un certain type de vibrations et ne permettent pas d'empêcher la transmission de tout type de vibrations au système de ventilation, chauffage et/ou climatisation. Or, lorsqu'un moteur entraîne une roue de pulseur, plusieurs phénomènes s'additionnent et provoquent une multitude de vibrations différentes. En premier lieu, le balourd de la roue provoque un mouvement radial du moteur qu'il faut éviter. Deuxièmement, un phénomène de « pompage » dû à l'aspiration de l'air par la roue de pulseur ainsi qu'à la déformation de la roue provoque un mouvement axial du moteur. Enfin, le moteur entraînant par rotation la roue de pulseur, un mouvement de tangage ou mouvement dit tangentiel du moteur est créé. En outre, selon la position du moteur dans le système de ventilation, chauffage et/ou climatisation, c'est-à-dire selon la position horizontale ou verticale de l'axe du moteur, les phénomènes évoqués ci-dessus sont plus ou moins intenses. En conséquence, un choix quant au type de vibration traité par le moyen de découplage est effectué. Un exemple est le document US 6 279 866. Dans ce document, deux modes de réalisation sont présentés. Le premier mode assure un découplage du moteur vis-à-vis du support moteur pour les vibrations radiales du moteur. L'autre mode assure un découplage du moteur vis-à-vis du support moteur pour les vibrations axiales du moteur.

On notera que les documents US2002/001484, GB1000252 et JP-H06147262 divulguent des dispositifs de support moteur selon l'art antérieur.

Ceci n'est pas satisfaisant du point de vue de la standardisation du moyen de découplage utilisé ni du point de vue de sa localisation dans le dispositif de support de moteur. Les moyens de découplage de l'art antérieur ne sont pas adaptés à découpler le moteur du support moteur quelque soit la position du moteur, c'est-à-dire selon que le moteur est en position horizontale ou verticale. En outre, toutes les nuisances sonores engendrées par cette multitude de vibrations ne sont pas traitées. Le confort des passagers du véhicule n'est donc pas optimal.

L'invention vient améliorer la situation.

Pour ce faire, l'invention porte sur un dispositif de support selon les caractéristiques de la revendication 1.

D'autres caractéristiques de l'invention sont listées ci-dessous :
- le moyen de découplage est un plot parallélépipédique comprenant un premier côté en contact direct avec la bague, un deuxième côté en contact direct avec la base et un troisième côté libre s'étendant dans un plan axial par rapport à l'axe A du moteur, le troisième côté présentant au moins un évidement s'étendant selon une direction parallèle à l'axe A.
- le moyen de découplage comprend un quatrième côté présentant au moins un évidement. La structure spécifique du moyen de découplage assure le découplage entre le moteur et le support moteur quelque soit le type de vibrations provoquées par la mise en oeuvre du moteur et de la roue de pulseur. Ainsi, les vibrations de type axial et de type tangentiel sont absorbées par le moyen de découplage. Ce faisant, une amélioration très nette du confort des passagers du véhicule est atteinte puisque toutes les nuisances sonores ne sont plus créées. L'évidement créé selon une direction parallèle à l'axe A provoque une souplesse du plot par rapport à une contrainte axiale et à une contrainte tangentielle tout en conservant une rigidité du plot par rapport à une contrainte radiale. Un avantage de cette structure particulière est de pallier la perte des propriétés amortissantes du matériau utilisé pour le moyen de découplage à basse température.

- le moyen de découplage est conformé en H.
- les plans radiaux sont localisés l'un par rapport à l'autre de sorte à ce que le centre de gravité du moteur soit situé entre les plans radiaux. Ainsi, le moteur peut être disposé dans le système de ventilation, chauffage et/ou climatisation selon une position horizontale ou verticale. La disposition particulière des plans radiaux standardise le dispositif de support, ceci engendrant une baisse des coûts de production.
- chaque moyen de découplage d'un premier plan radial est décalé d'un angle compris entre 0 et 120° par rapport à un moyen de découplage d'un deuxième plan radial.
- chaque plan radial comprend trois moyens de découplage répartis selon un décalage angulaire de 120°. La répartition particulière des moyens de découplage implique une uniformité des forces exercées sur les moyens de découplage. Ce faisant, l'amortissement ou l'atténuation des vibrations créées par le moteur lors de sa mise en oeuvre est réalisé de manière optimale.
- il comprend six moyens de découplage.
- un capot est associé à la base pour former un support moteur.
- le capot et la base sont d'un seul tenant.
- la base, la bague et le moyen de découplage forment une seule pièce.
- la pièce est en plastique.

D'autres caractéristiques et avantages de l'invention apparaîtront à l'examen de la description détaillée ci-après, et des dessins annexés, sur lesquels :
- la figure 1 est une vue de dessus du dispositif de support selon un premier mode de réalisation,
- la figure 1a est une vue en perspective du moyen de découplage selon l'invention,
- la figure 2a est une vue en perspective de la bague munie de moyens de découplage selon le premier mode de réalisation de l'invention,
- la figure 2b est une vue de dessus de la figure 2a,
- la figure 3 est une vue en perspective de la bague 3 selon l'invention,
- la figure 4 une vue en perspective de la base 2 selon le premier mode de réalisation,
- la figure 4a est une vue en coupe partielle de la base 2 de la figure 4,
- la figure 5 est une vue de côté du support moteur selon le premier mode de réalisation.

Les dessins annexés pourront, non seulement servir à compléter l'invention, mais aussi contribuer à sa définition, le cas échéant.

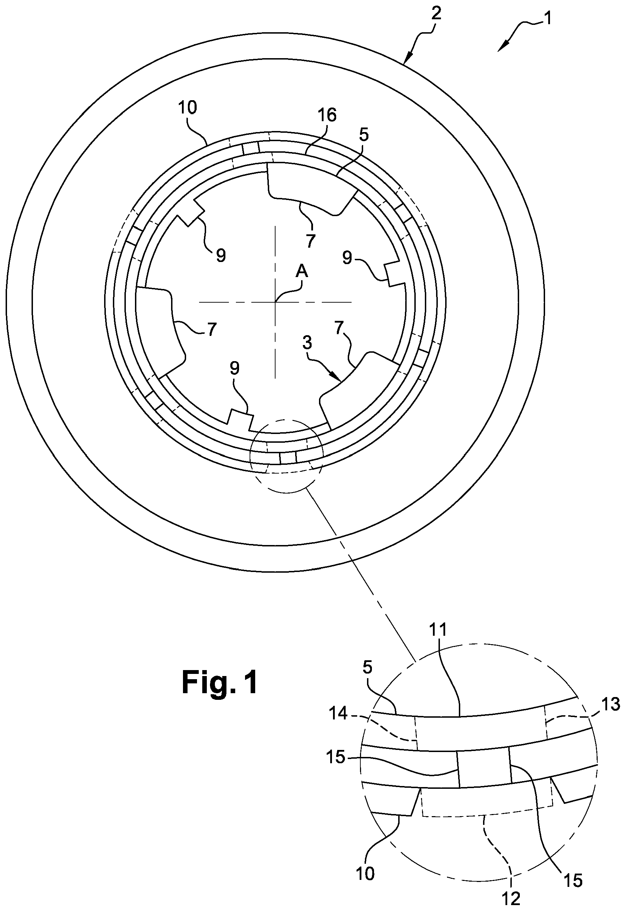

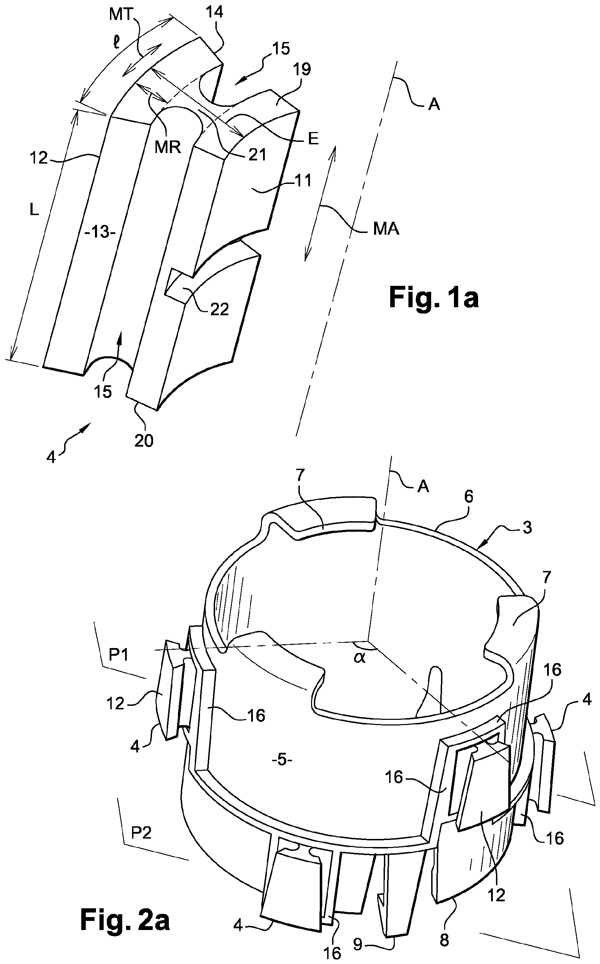

La figure 1 représente le dispositif de support 1 selon un premier mode de réalisation. Le dispositif de support 1 comprend une base 2, une bague 3 et des moyens de découplage 4.

La bague 3 est un cylindre creux. Elle s'étend selon un axe A et est apte à loger un moteur d'axe A. On entend par « s'étendre » le fait que la longueur du cylindre a une direction parallèle à celle de l'axe A. Le moteur non représenté entraîne en rotation, lors de sa mise en oeuvre une roue de pulseur logée dans une volute. Cette roue de pulseur crée un flux d'air traversant le système de ventilation, chauffage et/ou climatisation.

La bague 3 présente une première face 5 qui s'étend selon l'axe A. Cette première face 5 est la face extérieure du cylindre creux. Une première extrémité 6 de la bague 3 est ouverte et comprend trois épaulements 7. Ces épaulements 7 prolongent la première extrémité 7 selon une direction radiale par rapport à l'axe A. Une deuxième extrémité 8 ouverte, opposée à la première extrémité 7, comprend trois pattes flexibles 9. Les épaulements 7 et les pattes flexibles 9 maintiennent le moteur d'axe A à l'intérieur de la bague 3.

La base 2 est un cylindre creux dont les extrémités sont ouvertes. Le cylindre creux s'étend selon l'axe A et présente une deuxième face 10 qui s'étend selon cet axe A. Cette deuxième face 10 est la face interne de la base 2.

La bague 3 se localise à l'intérieur de la base 2 de sorte que la première face 5 de la bague 3 est en vis-à-vis de la deuxième face 10 de la base 2. Néanmoins, la bague 3 et la base 2 ne sont pas en contact direct. La bague 3 est maintenue à l'intérieur de la base 2 par l'intermédiaire des moyens de découplage 4.

Les moyens de découplage 4 sont des plots. Les moyens de découplage sont interposés entre la première face 5 de la bague 3 et la deuxième face 10 de la base 2. Chaque plot 4 est de forme parallélépipédique. On entend par « parallélépipédique » un hexaèdre dont les cotes sont des parallélogrammes, les côtés opposés étant parallèles et égales. Chaque plot 4 présente donc un premier coté 11 en contact direct avec la première face 5 de la bague 3 et un deuxième coté 12 en contact direct avec la deuxième face 10 de la base 2. Chaque plot 4 comprend également un troisième coté 13 libre s'étendant dans un plan axial par rapport à l'axe A. Ce troisième coté 13 libre présente au moins un évidement 15 s'étendant selon une direction parallèle à l'axe A. On entend par « libre » le fait que le troisième coté n'est pas en contact avec la bague 3 ou la base 2. On entend par « plan axial », tout plan contenant par l'axe A. Un quatrième côté 14, opposé au troisième côté 13, comprend au moins un évidement 15 s'étendant selon une direction parallèle à l'axe A. Il est à noter que le premier 11, le deuxième 12, le troisième 13 et le quatrième 14 côtés s'étendent selon une direction parallèle à l'axe A.

Ces moyens de découplage 4 assurent le découplage entre le moteur non représenté susceptible d'être logé dans la bague 3 et la base 2. Plus généralement, les moyens de découplage 4 assurent le découplage entre le moteur et le système de ventilation, chauffage et/ou climatisation dans lequel il est intégré.

Les moyens de découplage 4 sont en matière plastique. Plus précisément les moyens de découplage 4 sont en matière amortissante. On entend par « amortissante » le fait que la matière plastique absorbe les vibrations du moteur de sorte à ne pas les transmettre à la base. Un exemple de matière amortissante est le caoutchouc naturel. L'évidement 15 formé sur le troisième côté 13 et le quatrième côté 14 donnent une forme en H du plot selon une vue du dessus du dispositif de support (figure 1). Cette forme en H assure un découplage du moteur selon au moins trois mouvements distincts.

Sur la figure 1a, le moyen de découplage 14 est représenté seul. Le plot 4 a une longueur L, une largeur l et une épaisseur E. Le troisième côté 13 et la quatrième côté 14 présente chacun un évidement 15. Le plot 4 comprend également un cinquième coté 19 et un sixième côté 20. Les cinquième 19 et sixième 20 côtés sont libres et opposés l'un par rapport à l'autre. Chaque évidement 15 s'étend selon l'axe A sur toute la longueur du côté sur lequel il est formé. Ainsi, chaque évidement 15 se termine à la fois dans le cinquième côté 19 et dans le sixième côté 20 donnant une forme en H au plot 4 selon une vue parallèle à l'axe A. ici, l'évidement 15 se présente sous la forme d'une rainure en U. En variante, une forme en V est envisageable. La présence des deux évidements 15 forme un tronc 21. Ce tronc 21 est la partie du plot 4 qui est sollicitée pour assurer le découplage entre le moteur et la base 2. En effet, comme décrit ultérieurement, le premier côté 11 et le deuxième coté 12 du plot 4 sont entourés par des nervures 16 et des arêtes 17. Ces nervures 16 forment un berceau 23 pour chaque plot 4. Ainsi, seul le tronc 21 de chaque plot est déformable lors de la mise en oeuvre du moteur et de la roue de pulseur. Les dimensions des évidements 15 sont choisies de sorte à ce que le tronc puisse découpler le moteur de la base 2. Ainsi, plus le plot 4 est épais, plus les évidements 15 sont superficiels. Autrement dit, la largeur du tronc 21 est supérieure ou égale à 20% de la largeur l du plot 4. De même, l'épaisseur du tronc 21 est supérieure ou égale à 20% de l'épaisseur E du plot 4. Une entaille 22 est formée sur le première côté 11 du plot 4. Cette entaille 22 coopère avec une nervure 16 lors du surmoulage du plot 4 sur la bague 3. La nervure coopérant avec l'entaille 22 augmente la surface de contact entre le premier côté 11 et la première face 5 de la bague 3 pour renforcer la liaison mécanique entre le plot 4 et la bague 3.

Le premier mouvement engendré par la mise en oeuvre du moteur et de la roue de pulseur est un mouvement axial MA. On entend par mouvement axial un mouvement suivant une direction parallèle à l'axe A. Ce mouvement axial est plus particulièrement un mouvement dit de pompage provoqué par la rotation de la roue de pulseur. Le tronc 21 de chaque plot 4 se déforme selon une direction parallèle à l'axe A pour atténuer ce mouvement. Le deuxième mouvement est un mouvement radial MR. On entend par mouvement radial un mouvement suivant une direction radiale par rapport à l'axe A. Le tronc 21 est alors compressé et/ou décompressé selon son épaisseur pour empêcher la transmission de ce mouvement à la base 2. Le troisième mouvement est un mouvement tangentiel MT. On entend par mouvement tangentiel un mouvement de rotation par rapport à l'axe A. Le tronc 21 subit également ce mouvement et se déforme dans un sens de rotation horaire et/ou anti-horaire par rapport à l'axe A. En conséquence, le moyen de découplage 4 permet un découplage tridimensionnel de la bague 3 soumise aux mouvements du moteur par rapport à la base 2.

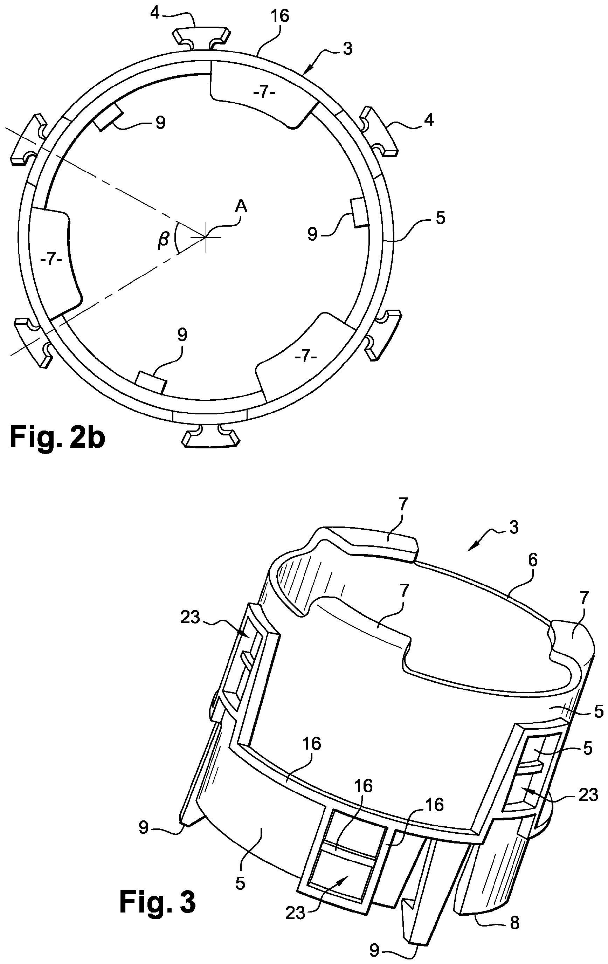

En figure 2a et 2b est représentée la bague 3 munie des moyens de découplage 4. Les moyens de découplage 4 sont au nombre de six dans le premier mode de réalisation. Parmi les six plots 4, au moins deux plots 4 sont répartis selon un premier plan radial P1 et au moins deux plots 4 sont répartis selon un deuxième plan radial P2. On entend par « plan radial », tout plan orthogonal à l'axe A et s'étendant selon une direction radiale par rapport à l'axe A. Le premier plan radial P1 étant distinct du deuxième plan radial P2, la répartition de la pluralité de plots forment au moins deux rangées de plots. Selon la figure 2a, trois plots 4 sont répartis selon le premier plan radial P1 et les trois autres plots sont répartis selon le deuxième plan radial P2.

La position des plans radiaux P1 et P2 est choisie de sorte à ce que le centre de gravité G du moteur non représenté se situe entre ces deux plans radiaux P1 et P2. Ainsi, quelque soit la position d'utilisation du moteur, ce dernier est toujours maintenu correctement dans la base 2. En d'autres termes, que l'axe A du moteur soit en position horizontale ou verticale, la répartition des plots 4 assure un maintien du moteur dans la base 2. La présence de six plots 4 et la répartition de ces plots implique une amélioration dans la standardisation du dispositif de support. En effet, lorsqu'un dispositif de support de l'art antérieur ne comprend que trois plots de découplage, le centre de gravité du moteur peut, lorsque l'axe A du moteur est en position horizontale, provoquer une force sur une partie du moteur qui n'est pas opposée. Ce faisant, l'axe du moteur peut être incliné par rapport à l'horizontale, ce qui entraînerait des frottements de la roue de pulseur sur la paroi interne de la volute la contenant. En outre, il est avantageux de disposer les plans radiaux P1 et P2 aux extrémités de la bague 3. de ce fait, quelque soit le moteur logé dans la bague 3, son centre de gravité G se trouvera entre ces deux plans radiaux. Ainsi, une même bague 3 munie des plots 4 répartis selon les deux plans radiaux P1 et P2 localisés aux extrémités de la bague 3 est utilisable avec des moteurs de dimensions identiques mais ayant leur centre de gravité G localisé différemment. Une amélioration dans la standardisation du dispositif de support 1 est ainsi obtenue.

Les trois plots répartis selon un même plan radial sont décalés les uns des autres d'un angle α de 120° par rapport à l'axe A. Cette répartition des plots d'un même plan radial permet un équilibre statique et dynamique du moteur dans les plans parallèles à l'axe A. D'une manière générale, le décalage angulaire α est déterminé par le ratio suivant : α = 360 / (nombre de plots répartis dans un même plan radial).

Selon le premier mode de réalisation, chaque plot 4 est décalé du plot voisin selon un angle β de 60°. Cette répartition implique une amélioration du point de vue de l'équilibre dans le plan perpendiculaire à l'axe du moteur. On entend par « plot voisin » le plot qui succède à un plot précédent en parcourant la première face 5 de la bague 3. D'une manière générale, chaque moyen de découplage 4 d'un premier plan radial P1 est décalé d'un angle β compris entre 0 et 120° par rapport à un moyen de découplage 4 d'un deuxième plan radial P2.

En figure 3 est représentée la bague 3 seule. Les nervures 16 de la bague 3 entourant le premier côté 11 de chaque plot 4 sont disposées sur la première face 5 de la bague 3. Les nervures 16 forment des berceaux 23. Un berceau 23 est conformé pour accueillir le premier côté 11 d'un plot 4. Quatre nervures 16 délimitent un berceau 23 de sorte à ce qu'il soit de forme rectangulaire. Une nervure 16 supplémentaire est localisée au centre du berceau 23. Cette nervure 16 supplémentaire coopère avec l'entaille 22 du plot 4 afin de consolider la tenue mécanique entre le premier côté 11 du plot et la première face 5 de la bague 3. Les berceaux formés par les nervures interviennent dans le surmoulage des plots 4. Le procédé de fabrication du dispositif de support 1 sera décrit ultérieurement.

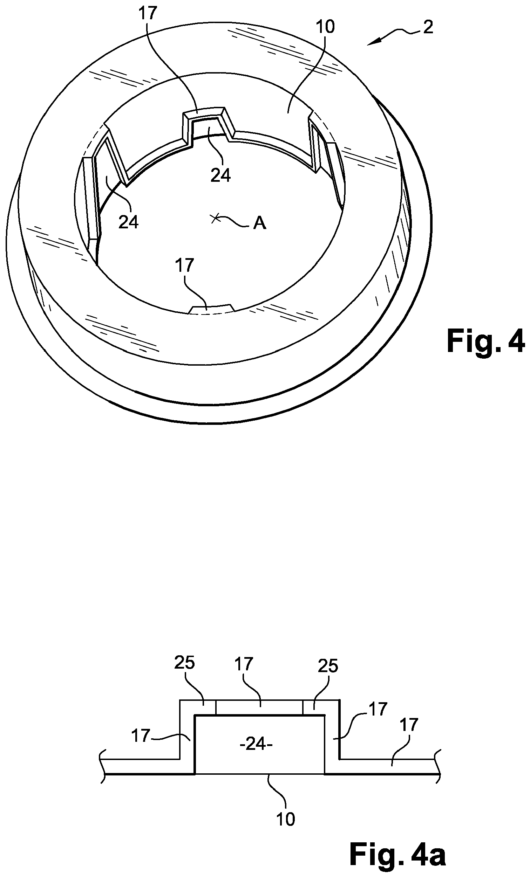

Selon un premier mode de réalisation, la bague 3 et les plots 4 sont d'un seul tenant. On entend par « d'un seul tenant » le fait que la bague 3 et les plots 4 forment une pièce unique 26. Dans ce mode de réalisation, le dispositif de support 1 est formé par l'assemblage de la base 2 à la pièce unique 26 par l'intermédiaire des plots 4. Selon la figure 4, sur la deuxième face 10 de la base 2, sont disposées des arêtes 17. Ces arêtes 17 entourent partiellement le deuxième côté 12 des plots 4 en contact direct avec la deuxième face 10. Les arêtes 17 forment des logements 24. Chaque logement 24 est conformé pour accueillir le deuxième côté 12 d'un plot 4. Plus précisément, chaque logement 24 est formé par trois arêtes 17. Ainsi, un côté du logement est libre, c'est-à-dire qu'un côté du logement 24 ne présente d'arête afin de pouvoir introduire le deuxième côté du plot 4. Les arêtes 17 formant un logement 24 sont disposées de sorte à conformer le logement 24 en trapèze. Ainsi, lorsque le deuxième côté 12 d'un plot est inséré dans le logement 24, la forme en trapèze assure une introduction aisée du deuxième côté 12 dans le logement 24. Bien entendu, selon ce mode de réalisation, le deuxième côté du plot 4 présente une forme trapézoïdale de manière à coopérer avec le logement. La correspondance de forme entre le logement 24 et le deuxième côté implique à la fois une facilité de montage et une fixation de la pièce unique 26 avec la base 2. En outre, selon la figure 4a, chaque arête 17 présente une collerette 25. L'arête 17 a ainsi une forme en L. lors de l'assemblage de la base 2 sur la pièce unique 26, chaque deuxième côté 12 des plots 4 pénètre dans un logement 24. La coopération de forme entre le deuxième côté 12 et la collerette 25 de chaque arête 17 maintient à demeure les plots 4 dans leur logement 24. Autrement dit, les plots 4 sont insérés par coulissement dans les logements 24, les collerettes 25 assurant une retenue radiale des plots 4 vis-à-vis de la base 2.

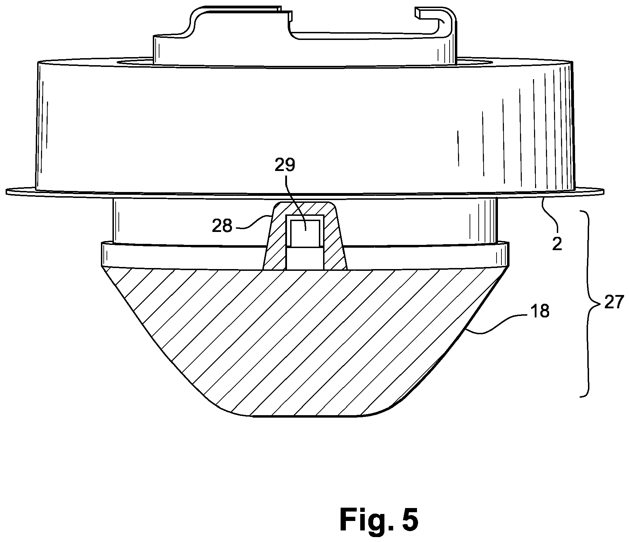

En figure 5 est représenté la base 2 et un capot 18. La base 2 et le capot 18 la base 2 forme un support moteur 27. Le capot 18 est un bol qui ferme une extrémité de la base 2. Le capot 18 comporte au moins une languette 28 coopérant avec un ergot 29 disposé sur la base 2. La languette 28 et l'ergot 29 forment un moyen de fixation entre la base 2 et le capot 18. Le fait que le support moteur 27 soit en deux parties distinctes permet de réaliser l'équilibrage du moteur. En ce sens, lorsque le dispositif de support 1 est formé, à savoir la base 2 fixée à la pièce unique 26, le moteur est inséré dans la bague 3 et est maintenu à l'intérieur de celle-ci par l'intermédiaire des épaulements 7 et des pattes flexibles 9. Ensuite, le moteur est installé et est maintenu dans un banc d'essai par son fond. Le maintien du moteur par son fond permet de monter à force la roue de pulseur sur l'arbre du moteur. Ainsi, le dispositif de support 1 n'est pas soumis aux forces exercées sur la roue de pulseur et sur le moteur pour le montage de cette roue. Aucune détérioration du dispositif de support ne peut survenir bien qu'il loge le moteur. Enfin, la roue de pulseur est équilibrée. Pour cela, le moteur est mis en oeuvre et entraîne la roue de pulseur. Le fait que la base 2 soit ouverte et que le moteur soit maintenu par son fond dans le banc d'essai implique que le dispositif de support n'intervient pas dans les tests. Ce faisant, l'équilibrage de la roue de pulseur n'est pas perturbé par le dispositif de support comprenant les moyens de découplage.

Selon un deuxième mode de réalisation non représenté, le dispositif de support 1 est obtenu selon un unique procédé de moulage. En premier lieu, la bague 3 et la base 2 sont formées par moulage d'une première matière plastique. Ensuite, les plots 4 sont surmoulés à la fois sur la base 2 et la bague 3. Les plots 4 sont de préférence obtenus avec une deuxième matière plastique, distincte de la première matière plastique. Dans ce mode de réalisation, le moyen de fixation constitué par l'ergot 29 et la languette 28 ne sont plus présents respectivement sur la base 2 et la bague 3. Cependant, l'avantage que procure l'ouverture de la base 2 pour fixer le moteur par son fond dans un banc d'essai demeure toujours présent. En outre, les arêtes 17 formant un logement 24 entourent totalement le deuxième côté 12 du plot 4 associé puisqu'il n'est plus nécessaire d'insérer le deuxième côté dans ledit logement 24. il est à noter que ce procédé de fabrication est qualifié de « one shot ». En d'autres termes, ce procédé permet d'obtenir en utilisant un seul appareil de moulage le dispositif de support dans lequel la base, la bague et le ou les moyens de découplage forment une seule pièce. Plus précisément, le moulage de la base et de la bague est effectué dans un même moule à partir d'une première matière plastique. Ensuite, une deuxième matière plastique est introduite dans le même moule pour former le ou les moyens de découplage. Les moyens de découplage sont alors surmoulés sur la base et la bague, ces dernières étant toujours présentes dans le moule lors du surmoulage des moyens de découplage. Dans ce mode de réalisation, les arêtes 17 orientent la deuxième matière plastique vers les logements 24 lors du surmoulage du ou des moyens de découplage. En outre, la forme trapézoïdale des logements 24 améliore la facilité de moulage des plots 4.

Selon un troisième mode de réalisation non représenté, le support moteur 27 est d'un seul tenant. Ainsi, lorsque le moteur est logé dans la bague 3 munie de ces plots 4, ces derniers sont insérés dans les logements 24 issus de la base 2 formant une seule pièce avec le capot 18. Dans ce mode de réalisation, les tests de performance du moteur sont effectués avant la mise en place du dispositif de support 1 sur le moteur.

Selon un quatrième mode de réalisation non représenté, le dispositif de support 1 est apte à loger un moteur à deux roues. Dans ce cas, la base 2 seule forme le support moteur et comprend des moyens pour fixer ledit dispositif de support au système de ventilation, chauffage et/ou climatisation.

Selon une autre variante de l'invention, le moyen de découplage comprend un seul évidement 15 sur le troisième côté 13. Autrement dit, le quatrième côté 14 présente une surface plane. Le plot 4 présente alors une forme en U.

Quelque soit le mode ou la variante de réalisation envisagé, les caractéristiques suivantes s'appliquent.

La base 2 est formée par une première matière plastique. De préférence, la première matière plastique est du polypropylène. La bague 3 est également formée par cette première matière plastique.
Le moyen de découplage 4 sous la forme d'un plot 4 est formé par une deuxième matière plastique. Cette deuxième matière plastique est du caoutchouc naturel, du polypropylène, de l'EPDM ou de SEBS. Il est à noter que la forme en H du moyen de découplage 4 permet d'utiliser par exemple du polypropylène comme deuxième matière plastique. En effet, bien que le polypropylène ne possède pas de bonnes propriétés élastiques comparées à celles du caoutchouc naturel, il peut être utilisé pour constituer le moyen de découplage 4 puisque les évidements 15 sur le troisième 13 et quatrième 14 côtés impliquent une flexibilité du moyen de découplage au niveau du tronc 21.
En outre, la forme en H du moyen de découplage permet de pallier à la perte de propriétés élastiques lorsque la température de la deuxième matière plastique est basse, par exemple inférieure à 0°C. Ainsi, lorsqu'un véhicule automobile comprenant un système de ventilation, chauffage et/ou climatisation équipé d'un dispositif de support selon l'invention est utilisé lors de la période hivernale, la forme en H contribue à assurer le découplage tridimensionnel du moteur vis-à-vis du support moteur.

## Revendications

1. Ensemble comprenant un moteur d'axe (A), une roue de pulseur et un dispositif de support (1) du moteur d'axe (A), qui lors de sa mise en oeuvre entraîne la roue de pulseur pour un système de ventilation, chauffage et/ou ventilation pour véhicule automobile, ledit dispositif de support (1) comprenant :
- une bague (3) qui est un cylindre creux et qui s'étend selon un axe (A), ladite bague (3) étant apte à loger ledit moteur et présentant une première face (5) qui correspond à la face extérieure du cylindre creux et qui s'étend selon l'axe (A),
- une base (2) qui présente une deuxième face (10), correspondant à la face interne de ladite base (2), et qui s'étend selon l'axe (A),
- au moins deux moyens de découplage (4) des vibrations du moteur reliant la base (2) et la bague (3), lesdits au moins deux moyens de découplage (4) étant interposés entre la première (5) et la deuxième (10) face,
**caractérisé en ce que** lesdits au moins deux moyens de découplage (4) sont répartis selon au moins deux plans radiaux distincts (P1, P2), un plan radial étant un plan orthogonal à l'axe (A) et s'étendant selon une direction radiale par rapport à l'axe (A), et **en ce que** chacun desdits au moins deux moyens de découplage (4) est un plot parallélépipédique comprenant un premier côté (11) en contact direct avec la première (5) face de la bague (3), un deuxième côté (12) en contact direct avec la deuxième (10) face de la base (2) et un troisième côté qui est libre (13) et qui s'étend dans un plan axial par rapport à l'axe (A) dudit moteur, le troisième côté (13) présentant au moins un évidement (15) qui s'étend selon une direction parallèle à l'axe (A).

2. Ensemble selon la revendication 1, dans lequel le moyen de découplage (4) comprend un quatrième côté (14) présentant au moins un évidement (15).

3. Ensemble selon l'une quelconque des revendications 1 à 2, dans lequel le moyen de découplage (4) est conformé en H.

4. Ensemble selon la revendication 1, dans lequel les plans radiaux (P1, P2) sont localisés l'un par rapport à l'autre de sorte à ce que le centre de gravité (G) du moteur soit situé entre les plans radiaux (P1, P2).

5. Ensemble selon l'une quelconque des revendications 1 à 4, dans lequel chaque moyen de découplage (4) d'un premier plan radial (P1) est décalé d'un angle (β) compris entre 0 et 120° par rapport à un moyen de découplage (4) d'un deuxième plan radial (P2).

6. Ensemble selon l'une quelconque des revendications 1 à 5, dans lequel chaque plan radial (P1, P2) comprend trois moyens de découplage (4) répartis selon un décalage angulaire (a) de 120°.

7. Ensemble selon l'une quelconque des revendications 1 à 6, dans lequel il comprend six moyens de découplage (4).

8. Ensemble selon l'une quelconque des revendications 1 à 7, dans lequel un capot (18) est associé à la base (2) pour former un support moteur (27).

9. Ensemble selon la revendication 8, dans lequel le capot et la base sont d'un seul tenant.

10. Ensemble selon l'une quelconque des revendications 1 à 8, dans lequel la base (2), la bague (3) et le moyen de découplage (4) forment une seule pièce.

11. Ensemble selon la revendication 10, dans lequel la pièce est en plastique.

## Patentansprüche

1. Einheit, die einen Motor mit einer Achse (A), ein Gebläserad und eine Trägervorrichtung (1) des Motors mit einer Achse (A) enthält, der bei seinem Einsatz das Gebläserad für eine Belüftungs-, Heizungs- und/oder Belüftungsanlage für ein Kraftfahrzeug antreibt, wobei die Trägervorrichtung (1) enthält:
- einen Ring (3), der ein Hohlzylinder ist und sich gemäß einer Achse (A) erstreckt, wobei der Ring (3) den Motor aufnehmen kann und eine erste Wand (5) aufweist, die der Außenwand des Hohlzylinders entspricht und sich gemäß der Achse (A) erstreckt,
- eine Basis (2), die eine zweite Wand (10) aufweist, die der Innenwand der Basis (2) entspricht und sich gemäß der Achse (A) erstreckt,
- mindestens zwei Entkopplungseinrichtungen (4) der Schwingungen des Motors, die die Basis (2) und den Ring (3) verbinden, wobei die mindestens zwei Entkopplungseinrichtungen (4) zwischen die erste (5) und die zweite Wand (10) eingefügt sind,
**dadurch gekennzeichnet, dass** die mindestens zwei Entkopplungseinrichtungen (4) gemäß mindestens zwei unterschiedlichen radialen Ebenen (P1, P2) verteilt sind, wobei eine radiale Ebene eine Ebene orthogonal zur Achse (A) ist und sich gemäß einer radialen Richtung bezüglich der Achse (A) erstreckt, und dass jede der mindestens zwei Entkopplungseinrichtungen (4) ein parallelepipedischer Block ist, der eine erste Seite (11) in direktem Kontakt mit der ersten Wand (5) des Rings (3), eine zweite Seite (12) in direktem Kontakt mit der zweiten Wand (10) der Basis (2) und eine dritte Seite (13) enthält, die frei ist und sich in einer axialen Ebene bezüglich der Achse (A) des Motors erstreckt, wobei die dritte Seite (13) mindestens eine Aussparung (15) aufweist, die sich gemäß einer Richtung parallel zur Achse (A) erstreckt.

2. Einheit nach Anspruch 1, wobei die Entkopplungseinrichtung (4) eine vierte Seite (14) enthält, die mindestens eine Aussparung (15) aufweist.

3. Einheit nach einem der Ansprüche 1 bis 2, wobei die Entkopplungseinrichtung (4) H-förmig ist.

4. Einheit nach Anspruch 1, wobei die radialen Ebenen (P1, P2) zueinander so angeordnet sind, dass der Schwerpunkt (G) des Motors sich zwischen den radialen Ebenen (P1, P2) befindet.

5. Einheit nach einem der Ansprüche 1 bis 4, wobei jede Entkopplungseinrichtung (4) einer ersten radialen Ebene (P1) um einen Winkel (β) zwischen 0 und 120° bezüglich einer Entkopplungseinrichtung (4) einer zweiten radialen Ebene (P2) versetzt ist.

6. Einheit nach einem der Ansprüche 1 bis 5, wobei jede radiale Ebene (P1, P2) drei Entkopplungseinrichtungen (4) enthält, die gemäß einem Winkelversatz (α) von 120° verteilt sind.

7. Einheit nach einem der Ansprüche 1 bis 6, wobei sie sechs Entkopplungseinrichtungen (4) enthält.

8. Einheit nach einem der Ansprüche 1 bis 7, wobei ein Deckel (18) der Basis (2) zugeordnet ist, um einen Motorträger (27) zu bilden.

9. Einheit nach Anspruch 8, wobei der Deckel und die Basis aus einem Stück sind.

10. Einheit nach einem der Ansprüche 1 bis 8, wobei die Basis (2), der Ring (3) und die Entkopplungseinrichtung (4) ein einziges Bauteil bilden.

11. Einheit nach Anspruch 10, wobei das Bauteil aus Kunststoff ist.

## Claims

1. Assembly comprising a motor of axis (A), a blower impeller and a support device (1) for the motor of axis (A), which, while it is being used, drives the blower impeller for a ventilation, heating and/or ventilation system for a motor vehicle, said support device (1) comprising:
- a ring (3) which is a hollow cylinder and which extends along an axis (A), said ring (3) being able to accommodate said motor and having a first face (5) which corresponds to the outer face of the hollow cylinder and which extends along the axis (A),
- a base (2) which has a second face (10), corresponding to the internal face of said base (2), and which extends along the axis (A),
- at least two means (4) for decoupling the vibrations of the motor connecting the base (2) and the ring (3), said at least two decoupling means (4) being interposed between the first face (5) and the second face (10),
**characterized in that** said at least two decoupling means (4) are distributed in at least two different radial planes (P1, P2), a radial plane being a plane orthogonal to the axis (A) and extending in a radial direction with respect to the axis (A), and **in that** each of said at least two decoupling means (4) is a parallelepipedal protrusion comprising a first side (11) in direct contact with the first face (5) of the ring (3), a second side (12) in direct contact with the second face (10) of the base (2) and a third side (13) which is free and which extends in an axial plane with respect to the axis (A) of said motor, the third side (13) having at least one recess (15) which extends in a direction parallel to the axis (A).

2. Assembly according to Claim 1, wherein the decoupling means (4) comprises a fourth side (14) having at least one recess (15).

3. Assembly according to either one of Claims 1 and 2, wherein the decoupling means (4) is H-shaped.

4. Assembly according to Claim 1, wherein the radial planes (P1, P2) are located with respect to one another such that the centre of gravity (G) of the motor is situated between the radial planes (P1, P2).

5. Assembly according to any one of Claims 1 to 4, wherein each decoupling means (4) in a first radial plane (P1) is offset by an angle (β) of between 0 and 120° with respect to a decoupling means (4) in a second radial plane (P2).

6. Assembly according to any one of Claims 1 to 5, wherein each radial plane (P1, P2) comprises three decoupling means (4) distributed at an angular offset (α) of 120°.

7. Assembly according to any one of Claims 1 to 6, which comprises six decoupling means (4).

8. Assembly according to any one of Claims 1 to 7, wherein a cover (18) is joined to the base (2) to form a motor support (27).

9. Assembly according to Claim 8, wherein the cover and the base are in one piece.

10. Assembly according to any one of Claims 1 to 8, wherein the base (2), the ring (3) and the decoupling means (4) form a single part.

11. Assembly according to Claim 10, wherein the part is made of plastic.
